# EUROPÄISCHE PATENTANMELDUNG

(11) **EP 4 729 364 A2**
(43) Veröffentlichungstag der Anmeldung: **22.04.2026**
(21) Anmeldenummer: 25202133.2
(22) Anmeldetag: 15.09.2025
(51) Int. Cl.: B60R 13/08

(54) **DÄMMGEHÄUSE FÜR EIN BAUTEIL EINES KRAFTFAHRZEUGS**

(30) Priorität: 25.09.2024 DE 102024209275
(71) Anmelder: VOLKSWAGEN AG, 38440 Wolfsburg (DE)
(72) Erfinder: Widera, Bernd, 38440 Wolfsburg (DE); Mucha, Ingo, 38440 Wolfsburg (DE)

(57) **Zusammenfassung**

Es wird ein Dämmgehäuse (14) für ein Bauteil (52) eines Kraftfahrzeugs (2) , beispielsweise für ein geräuschemittierendes Bauteil, vorgeschlagen, welches ausschließlich über eine Klemmverbindung an dem Kraftfahrzeug (2) befestigt wird. Es kann daher auf weitere Befestigungsmittel wie Schrauben oder Bolzen verzichtet werden. Es werden so Schallbrücken, die zu unerwünschter Wahrnehmung einer Aktion des Bauteils durch einen Nutzer im Innenraum des Kraftfahrzeugs führen könnten, vermieden.

## Beschreibung

Die Erfindung betrifft ein Dämmgehäuse für ein Bauteil eines Kraftfahrzeugs, mit einem ersten Gehäuseteil und einem das erste Gehäuseteil verschließenden zweiten Gehäuseteil, ein System aus einem Befestigungselement und einem Dämmgehäuse für ein Bauteil eines Kraftfahrzeugs, sowie ein Kraftfahrzeug.

Einzelne Bauteile eines Kraftfahrzeugs und insbesondere Bauteile, die eine Geräuschquelle darstellen und relativ nah an einem Innenraum des Kraftfahrzeugs angeordnet sind, werden gemäß Stand der Technik regelmäßig gekapselt oder gedämmt. Eine solche Geräuschquelle können beispielsweise Elektromotoren aller Art, aber auch Hydraulikelemente oder ähnliches sein. Insbesondere wenn für einen Nutzer des Kraftfahrzeugs nicht unmittelbar erkennbar ist, welches Bauteil ein von ihm wahrgenommenes Geräusch verursacht, und ob das Geräusch aufgrund eines regulären Verhaltens des Kraftfahrzeugs entsteht, oder ob eine Fehlfunktion vorliegt, ist es wünschenswert, eine Wahrnehmung des entsprechenden Bauteils des Kraftfahrzeugs durch den Nutzer als Geräuschquelle zu vermeiden.

Hierzu können Dämmelemente wie beispielsweise Schaumstoffteile oder andere Teile aus einem dämmenden Material, beispielsweise einem Schall absorbierenden Material, verwendet werden. Das Bauteil wird dabei auf herkömmliche Weise mit dem Kraftfahrzeug, beispielsweise mit einem Rohbau oder einer Karosserie des Kraftfahrzeugs, verbunden. Anschließend wird das Bauteil mit den Dämmelementen verkleidet. Es ist ebenfalls möglich, ein Dämmgehäuse zu verwenden. Die EP 3 546 682 A1 beschreibt in diesem Zusammenhang eine Antriebsanordnung eines Kraftfahrzeugs, die beispielsweise zum Entriegeln einer Heckklappe eines Kraftfahrzeugs verwendet werden kann. Die Antriebsanordnung wird von einer Haltevorrichtung in Form eines Halterahmens getragen. Der Halterahmen wiederum wird über bolzenförmige Befestigungselemente in einer kraftfahrzeugseitigen Einbauposition fixiert. Anschließend wird die Antriebsanordnung mit einem Schall dämmenden Gehäuse verkleidet.

Die aus dem Stand der Technik bekannten Maßnahmen, um Geräuschquellen im Kraftfahrzeug schalltechnisch zu dämmen, sind in der Montage verhältnismäßig aufwendig und erscheinen hinsichtlich der Schallisolation verbesserungswürdig. Es ist daher die Aufgabe der vorliegenden Erfindung, ein Dämmgehäuse anzugeben, das eine einfachere Montage und/oder eine verbesserte Schalldämmung des zu dämmenden Bauteils ermöglicht.

Die Aufgabe wird erfindungsgemäß gelöst durch ein Dämmgehäuse der eingangs genannten Art, bei dem eine dreidimensionale Außenkontur des Dämmgehäuses ausgestaltet ist, um über eine Formschlussverbindung mit einem Rohbau des Kraftfahrzeugs verbunden zu werden, und wobei das Dämmgehäuse keine Durchgangsöffnungen für Befestigungselemente aufweist. Die Aufgabe wird weiterhin gelöst durch ein System aus einem Befestigungselement und einem Dämmgehäuse für ein Bauteil eines Kraftfahrzeugs, wobei das Befestigungselement Teil eines Rohbaus des Kraftfahrzeugs oder an einem Rohbau des Kraftfahrzeugs festgelegt ist, und wobei das Befestigungselement und das Dämmgehäuse zum Ausbilden einer Klemmverbindung zwischen dem Dämmgehäuse und dem Befestigungselement ausgebildet sind, sowie durch ein Kraftfahrzeug mit einem solchen Dämmgehäuse und/oder mit einem solchen System.

Erfindungsgemäß wird also ein Dämmgehäuse für ein Bauteil eines Kraftfahrzeugs, beispielsweise für ein geräuschemittierendes Bauteil, vorgeschlagen, welches ausschließlich über eine Klemmverbindung an dem Kraftfahrzeug befestigt wird. Es kann daher auf weitere Befestigungsmittel wie Schrauben oder Bolzen verzichtet werden. Es werden so Schallbrücken, die zu unerwünschter Wahrnehmung einer Aktion des Bauteils durch einen Nutzer im Innenraum des Kraftfahrzeugs führen könnten, vermieden.

Unter einem Dämmgehäuse wird im Rahmen der vorliegenden Beschreibung insbesondere eine äußere Hülle für ein Bauteil verstanden, die einen Dämmeffekt aufweist. Der Dämmeffekt kann insbesondere ein Schalldämmeffekt sein. Der Dämmeffekt kann aber ebenso ein Wärmedämmeffekt sein. In dem Dämmgehäuse kann ein Hohlraum angeordnet sein, in dem das Bauteil aufgenommen werden kann. Der erste Gehäuseteil kann einer ersten Gehäusehälfte entsprechen, und der zweite Gehäuseteil kann einer zweiten Gehäusehälfte oder eine Gehäusedeckel entsprechen. Das Dämmgehäuse kann aber auch mehr als zwei Teile aufweisen.

Unter einem Bauteil eines Kraftfahrzeugs wird im Rahmen der vorliegenden Beschreibung insbesondere ein funktionales Bauteil verstanden, welches ein abgegrenztes Volumen einnimmt und keine strukturtragende Funktion im Kraftfahrzeug übernimmt. Das Bauteil kann im weitesten Sinne auch als Aggregat bezeichnet werden. Das Bauteil kann bewegliche Teile aufweisen oder auf andere Weise während des Betriebes räumlich-physikalische Änderungen erfahren. Beispielsweise kann das Bauteil auch ein Hydraulikbauteil sein. Insbesondere kann das Bauteil ein Bauteil sein, welches im Betrieb Geräusche verursacht. Solche Geräusche können beispielsweise von einem Motor wie einem Elektromotor, einem Getriebe, einem Seilzug oder ähnlichen Elementen verursacht werden. Das Bauteil des Kraftfahrzeugs kann relativ klein sein. Beispielsweise kann ein Volumen des Bauteils weniger als 2000 cm³, weniger als 1000 cm³, weniger als 500 cm³ oder weniger als 250 cm³ betragen. Das Bauteil kann beispielsweise ein sogenannter Parksperrenaktuator (PSA) sein. Dieser betätigt die Parksperre im Getriebe, wodurch erreicht wird, dass das Kraftfahrzeug in Stellung "P" des Getriebes auch ohne angezogene Parkbremse nicht wegrollt. Weiterhin kann der Parksperrenaktuator auch einen sogenannten "Multifunktionsschalter" (MFS) auf den Getrieben schalten. Der Multifunktionsschalter verarbeitet dabei elektronisch den Fahrerwunsch, beispielsweise, ob dieser rückwärts oder vorwärts fahren oder stehen bleiben möchte.

Unter einem Rohbau des Kraftfahrzeugs wird im Rahmen der vorliegenden Beschreibung insbesondere eine Struktur verstanden, die von einem Innenraum des Kraftfahrzeugs aus nicht sichtbar ist. Der Rohbau kann beispielsweise Rahmenelemente und/oder Karosserieelemente des Kraftfahrzeugs umfassen.

Unter einer Formschlussverbindung wird im Rahmen der vorliegenden Beschreibung insbesondere eine mechanische Verbindung zwischen zwei Elementen oder Bauteilen verstanden, bei der die zwei Elemente oder Bauteile so ineinandergreifen, dass ihre Form allein den Zusammenhalt gewährleistet. Der Zusammenhalt wird durch die Geometrie der Teile erreicht, sodass keine zusätzliche Kraft oder Reibung erforderlich ist, um die Bauteile zu fixieren. Insbesondere sind für eine solche Formschlussverbindung keine weiteren Befestigungselemente wie Schrauben, Bolzen, Klammern oder ähnliches notwendig.

Darunter, dass der zweite Gehäuseteil den ersten Gehäuseteil verschließt wird im Rahmen der vorliegenden Beschreibung insbesondere verstanden, dass die beiden Gehäuseteile derart zusammengefügt werden können, dass ein abgeschlossener Hohlraum innerhalb des Gehäuses entsteht. Der zweite Gehäuseteil kann beispielsweise als Deckel ausgestaltet sein.

Das erfindungsgemäße Dämmgehäuse hat den Vorteil, dass keine feste Verbindung wie beispielsweise eine Schraubverbindung zwischen dem Bauteil und der Karosserie besteht. Es wird so erreicht, dass eine Schallübertragung von dem Bauteil auf die Karosserie oder andere Teile des Kraftfahrzeugs weitgehend vermieden wird. Die gesamte Schallemission des Bauteils kann somit verringert werden. Je nach Ausgestaltung kann die Montage gegenüber herkömmlichen Lösungen einfacher sein, da gegebenenfalls die Formschlussverbindung ohne Einsatz von Werkzeugen hergestellt werden kann. Darüber hinaus kann eine Funktionsintegration von einerseits der mechanischen Halterung des Bauteils und andererseits der Schalldämmung das Bauteils erreicht werden, sodass weniger Einzelteile verwendet werden, was zu einer Senkung der Produktionskosten und der Montagekosten führen kann.

Vorteilhafterweise kann das Dämmgehäuse derart ausgestaltet sein, dass das Dämmgehäuse um das Bauteil des Kraftfahrzeugs herum mit Ausnahme von Anschlussöffnungen für das Bauteil eine vollständig geschlossene Oberfläche bildet. Es wird so erreicht, dass Schallemissionen, die von dem Bauteil ausgehen, weitgehend durch das Dämmgehäuse gedämmt werden können und keine Akustikbrücken, beispielsweise durch Öffnungen oder Befestigungselemente, bestehen. Die Anschlussöffnungen können beispielsweise Öffnungen für Kabel, Fluidleitungen oder mechanische Bauelemente wie einen Seilzug sein.

Eine Weiterbildung der Erfindung sieht vor, dass eine Außenseite des Dämmgehäuses zumindest einen Hinterschnitt, zumindest eine Nut oder zumindest einen Vorsprung zur Ausbildung der Formschlussverbindung mit dem Kraftfahrzeug aufweist. Eine solche Ausgestaltung kann die Montage des Dämmgehäuses vereinfachen sowie eine besonders sichere Formschlussverbindung gewährleisten
Es ist mit Vorteil möglich, dass eine Innenkontur des Dämmgehäuses derart an das Bauteil des Kraftfahrzeugs angepasst ist, dass das Bauteil zumindest 90% oder zumindest 95% eines Volumens eines durch das Dämmgehäuse gebildeten inneren Hohlraums ausfüllt. In einer besonders vorteilhaften Ausgestaltung füllt das Bauteil das gesamte Volumen des durch das Dämmgehäuse gebildeten inneren Hohlraums ein. Das Dämmgehäuse kann hierzu beispielsweise ein eingelegtes oder eingepresstes Formteil aufweisen, welches auf der einen Seite an die Innenkontur des Dämmgehäuses angepasst ist, und welches auf der anderen Seite an die Außenkontur des Bauteils angepasst ist. Es ist natürlich auch möglich, dass sowohl für den ersten Gehäuseteil als auch für den zweiten Gehäuseteil ein solches Formteil vorhanden ist. Das erste Formteil und das zweite Formteil können das Bauteil dann vollständig oder nahezu vollständig umschließen. Alternativ ist es möglich, dass eine nach innen weisende Oberfläche des Dämmgehäuses, mit anderen Worten also jeweils eine nach innen weisenden Oberfläche des ersten Gehäuseteils und des zweiten Gehäuseteils, in ihrer Kontur an die äußere Oberfläche des Bauteils angepasst ist. Es ergibt sich im Regelfall dann ein Dämmgehäuse, welches eine variierende Wandstärke aufweist. Die variierende Wandstärke kann von einer Ausdehnung, beispielsweise einer Länge oder einer Dicke, des Bauteils im jeweiligen Wandbereich des Dämmgehäuses abhängen.

In einer Weiterbildung der Erfindung kann vorgesehen sein, dass eine Innenkontur des Dämmgehäuses zur Aufnahme von zumindest einem Stabilisierungsteil des Bauteils ausgestaltet ist, um ein Verdrehen des Bauteils innerhalb des Dämmgehäuses zu verhindern.

Ein solches Stabilisierungsteil des Bauteils kann ein hakenartiges oder flügelartiges Element, beispielsweise ein Vorsprung oder ähnliches, sein. Beispielsweise kann das Stabilisierungsteil als flacher Vorsprung ausgestaltet sein, der in einen Schlitz in der Innenkontur des Dämmgehäuses eingreift. Es können eine Mehrzahl von Stabilisierungsteilen vorhanden sein, beispielsweise um eine Rotation des Bauteils um eine Mehrzahl von verschiedenen Rotationsachse zu vermeiden.

Gemäß einer vorteilhaften Ausgestaltung der Erfindung sind der erste Gehäuseteil und der zweite Gehäuseteil über eine Formschlussverbindung miteinander verbindbar. Die zugehörige Verbindung kann beispielsweise eine Rastverbindung oder eine Schnappverbindung sein. Es kann so die Montage des Bauteils sowie des Dämmgehäuses weiter vereinfacht werden, da auf diese Weise im Normalfall der erste Gehäuseteil und der zweite Gehäuseteil werkzeuglos miteinander verbunden werden können.

Es ist möglich, dass in einem zusammengefügten Zustand des ersten Gehäuseteils und des zweiten Gehäuseteils entlang eines Umfangs eines Grenzbereichs des ersten Gehäuseteils und des zweiten Gehäuseteils eine erste Seitenwand des ersten Gehäuseteils und eine zweite Seitenwand des zweiten Gehäuseteils zumindest bereichsweise überlappen. Es kann so eine besonders feste Verbindung zwischen dem ersten Gehäuseteil und dem zweiten Gehäuseteil erzielt werden. Gleichzeitig kann vermieden werden, dass durch einen möglicherweise zwischen dem ersten Gehäuseteil und dem zweiten Gehäuseteil bestehenden Spalt Schall aus dem Dämmgehäuse austritt.

Das erfindungsgemäße System aus einem Befestigungselement und einem Dämmgehäuse für ein Bauteil eines Kraftfahrzeugs kann mit jeder der beschriebenen Varianten eines Dämmgehäuses erstellt werden.

Unter einem Befestigungselement wird dabei insbesondere ein Bauteil oder ein Anteil eines Bauteils verstanden, welches eine Formschlussverbindung mit dem Dämmgehäuse ermöglicht. Das Befestigungselement kann in Form eines Hohlraums, eines Hinterschnitts, einer Aussparung, eines Haltebügels, eines oder mehrerer Haken oder auf sonstige geeignete Art und Weise ausgestaltet sein. Das Befestigungselement kann Teil des Rohbaus des Kraftfahrzeugs oder an diesem befestigt sein.

Vorteilhafterweise ist es möglich, keine von dem Befestigungselement und von dem Dämmgehäuse verschiedenen Befestigungsmittel zum Herstellen einer Verbindung zwischen dem Dämmgehäuse und dem Befestigungselement vorzusehen beziehungsweise zu verwenden. Es werden auf diese Weise Möglichkeiten zum Übertragen von Schall aus dem Inneren des Dämmgehäuses hinaus reduziert. Gleichzeitig kann die Montage des Bauteils und des Dämmgehäuses vereinfacht werden.

Eine besonders einfache Montage kann ermöglicht werden, wenn das Dämmgehäuse und/oder das Befestigungselement zum Herstellen einer Formschlussverbindung zwischen dem Dämmgehäuse und dem Befestigungselement temporär elastisch verformbar ausgestaltet ist oder sind. Beispielsweise kann das Dämmgehäuse zur Montage kurz zusammengedrückt werden. Analog ist es möglich, dass Befestigungselement zur Montage elastisch aufzuweiten. Beispielsweise kann ein Abstand von einem Haltebügel zu einem Gegenlager oder zu einem zweiten Haltebügel durch ein elastisches Auslenken zumindest eines der Haltebügel temporär vergrößert werden, sodass dann das Dämmgehäuse eingesetzt werden kann. Nach dem Einsetzen des Dämmgehäuses kann die temporäre Verformung dann elastisch rückgängig gemacht werden, wodurch die gewünschte Formschlussverbindung erreicht wird.

Vorteilhafterweise ist das System derart ausgestaltet, dass zumindest 90% der Kräfte, die das Bauteil mit dem Halteelement oder mit weiteren Bauteilen des Kraftfahrzeugs austauscht, von dem Dämmgehäuse übertragen werden. Mit anderen Worten wird das Bauteil vorzugsweise ausschließlich von dem Dämmgehäuse getragen. Es kann so auf weitere Halteelemente, Trägerelemente oder Rahmenelemente, die das Bauteil halten, verzichtet werden. Es kann auf diese Weise eine nochmals verbesserte Schallisolation durch das Vermeiden von Schallbrücken erreicht werden.

In bevorzugter Ausgestaltung ist das Dämmgehäuse für eine werkzeugfreie Montage an dem Befestigungselement ausgestaltet. Dies kann beispielsweise durch einen zuvor besprochenen elastischen Anteil des Dämmgehäuses oder des Befestigungselements erreicht werden. Es ist aber auch möglich, durch geschickte Ausgestaltung der Außenkonturen des Befestigungselements und des Dämmgehäuses eine werkzeugfreie Montage zu ermöglichen. Beispielsweise kann vorgesehen sein, dass ein Reibschluss zwischen dem Dämmgehäuse und dem Befestigungselement hergestellt wird, oder dass das Dämmgehäuse durch eine Drehbewegung in einen bestehenden Hohlraum eingefügt wird.

Eine Weiterbildung der Erfindung sieht vor, dass das Gehäuse ausgestaltet ist, um ein in einem Innenraum des Kraftfahrzeugs sichtbares Verschalungselement zu tragen. Das Dämmgehäuse selbst besteht im Regelfall nicht aus einem Material, welches eine optisch ansprechende Oberfläche aufweist. Es ist somit vorteilhaft, wenn das Dämmgehäuse selbst im Innenraum des Kraftfahrzeugs nicht sichtbar ist. Gleichzeitig ist der Einsatz des erfindungsgemäßen Dämmgehäuses insbesondere dann sinnvoll, wenn das Bauteil sich in der Nähe des Fahrzeuginnenraums befindet, da dann das Risiko einer als störend oder verwirrend empfundenen Geräuschwahrnehmung durch einen Nutzer steigt. Das Dämmgehäuse kann also funktional in die Gestaltung des Innenraums des Kraftfahrzeugs eingebunden werden, indem ein Verschalungselement vorgesehen wird, dass anteilig oder vollständig von dem Dämmgehäuse getragen wird.

Ausführungsbeispiele der Erfindung werden anhand der Zeichnungen und der nachfolgenden Beschreibung näher erläutert. Es zeigen:
- Fig. 1:: eine Ansicht eines vorderen Bereichs eines Innenraums eines Kraftfahrzeugs,
- Fig. 2:: eine Ansicht eines Ausschnitts des Rohbaus des in Figur 1 gezeigten Kraftfahrzeugs,
- Fig. 3:: zwei perspektivische Ansichten eines ersten Gehäuseteils,
- Fig. 4:: zwei perspektivische Ansichten eines zweiten Gehäuseteils ,
- Fig. 5:: einen Zustand, in dem der erste Gehäuseteils in das Befestigungselement eingesetzt worden ist,
- Fig. 6:: einen Zustand, in dem der erste Gehäuseteil in das Befestigungselement eingesetzt worden ist,
- Fig. 7:: einen Zustand, in dem ist das Bauteil in den dafür vorgesehenen Hohlraum in dem ersten Gehäuseteil eingesetzt worden ist,
- Fig. 8:: einen Zustand, in dem der zweite Gehäuseteil seine Endposition erreicht hat,
- Fig. 9:: eine Ansicht des Dämmgehäuses, auf das ein Verschalungselement aufgesetzt wurde,
- Fig. 10:: eine schematische Darstellung des Dämmgehäuses mit dem darin angeordneten Bauteil in Alleinstellung, und
- Fig. 11:: eine Detaildarstellung, in der ein Anteil des ersten Gehäuseteils sowie ein Teil des Bauteils dargestellt sind.

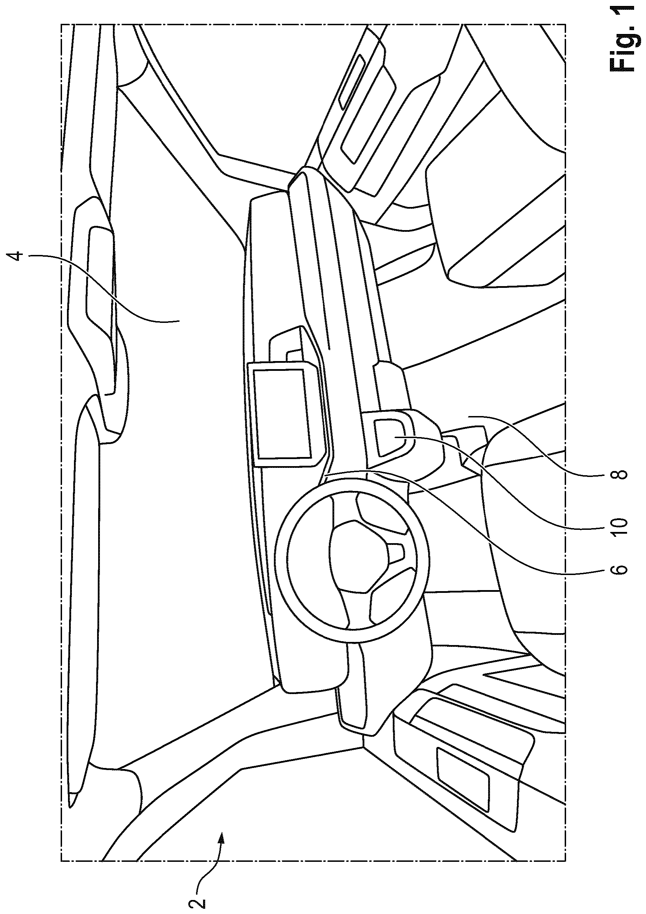

Figur 1 zeigt eine Ansicht eines vorderen Bereichs eines Innenraums 4 eines Kraftfahrzeugs 2. Dargestellt sind dabei unter anderem eine Armaturentafel 6 und eine Mittelkonsole 8. Die Ansicht dient zum besseren Verständnis und zum Einordnen der Erfindung. Dabei Ist im Bereich der Mittelkonsole 8 ein Becherhalter 10 dargestellt. Das in der Figur 1 nicht sichtbare erfindungsgemäße Dämmgehäuse kann beispielsweise unter dem Becherhalter 10 angeordnet sein. Die weiteren Figuren beziehen sich jeweils auf dieses Beispiel. Dabei ist das Dämmgehäuse, welches das Bauteil des Kraftfahrzeugs, im dargestellten Beispiel den Parksperrenaktuator, umschließt, sehr nahe am Innenraum 4 und somit ebenfalls nahe am Ohr eines Nutzers des Kraftfahrzeugs 2 angeordnet. Von dem Bauteil beziehungsweise dem Parksperrenaktuator ausgehende Geräusche können daher schon bei geringer Lautstärke dieser Geräusche als störend oder irritierend von dem Nutzer wahrgenommen werden.

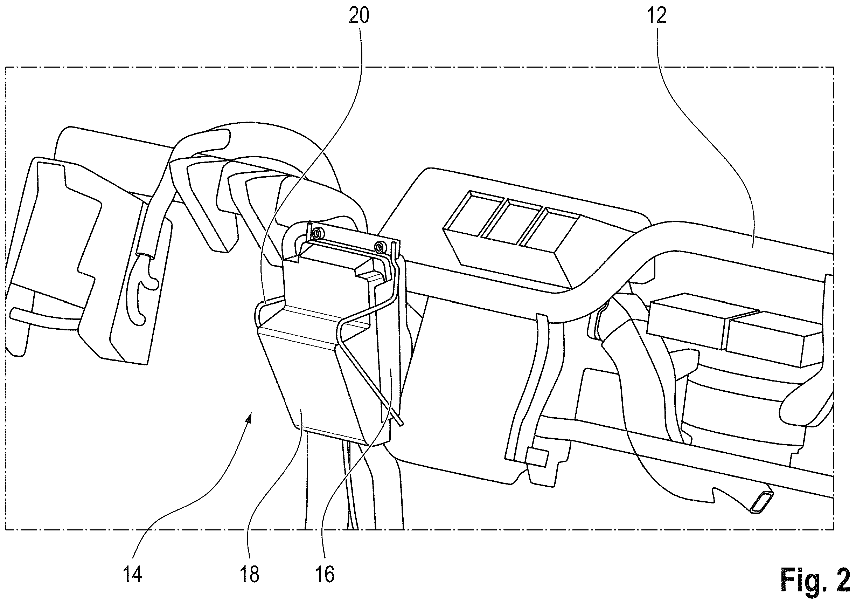

Figur 2 zeigt eine Ansicht eines Ausschnitts des Rohbaus 12 des in Figur 1 gezeigten Kraftfahrzeugs. Dabei ist an dem Rohbau 12 ein Befestigungselement 20 angeordnet, welches das Dämmgehäuse 14 trägt. Das Befestigungselement 20 und das Dämmgehäuse 14 sind dabei über eine Klemmverbindung miteinander verbunden. Im dargestellten Ausführungsbeispiel ist das Befestigungselement 20 als separates Bauteil ausgestaltet und mit Schrauben an dem Rohbau 12 festgelegt. Diese Ausgestaltung ist nicht zwingend und das Dämmgehäuse 14 könnte auch an einem anderen, zum Herstellen einer Klemmverbindung mit dem Dämmgehäuse 14 ausgestalteten Anteil des Rohbaus 12 befestigt werden. Das Dämmgehäuse 14 besteht aus einem ersten Gehäuseanteil 16, der im dargestellten Ausführungsbeispiel die rohbauseitige Hälfte des Dämmgehäuses 14 bildet, und aus einem zweiten Gehäuseanteil 18, der im dargestellten Ausführungsbeispiel die rohbauferne Hälfte des Dämmgehäuses 14, mit anderen Worten also die innenraumnahe Hälfte des Dämmgehäuses 14, bildet. Im dargestellten Ausführungsbeispiel werden sowohl der erste Gehäuseanteil 16 als auch der zweite Gehäuseanteil 18 von dem Befestigungselement 20 gehalten. Diese Ausgestaltung trägt zur Stabilität des gesamten Systems bei, da auf diese Weise der erste Gehäuseanteil 16 und der zweite Gehäuseanteil 18 durch das Befestigungselement 20 miteinander verbunden werden. Grundsätzlich ist es aber auch denkbar, dass nur der erste Gehäuseanteil 16 oder der zweite Gehäuseanteil 18 von dem Befestigungselement 20 gehalten wird.

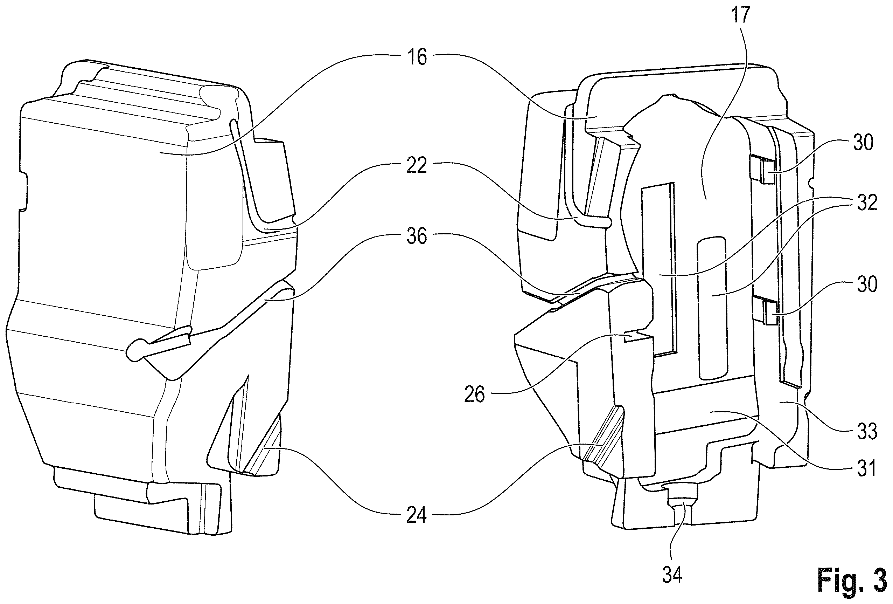

Figur 3 zeigt zwei perspektivische Ansichten eines ersten Gehäuseteils 16. Der erste Gehäuseteil 16 ist aus einem Kunststoff, beispielsweise einem begrenzt elastischen Kunststoff, hergestellt. Die Herstellung kann beispielsweise über ein Spritzgussverfahren erfolgen. Im rechten Bereich der Figur ist zu erkennen, dass der erste Gehäuseteil 16 an seinem rohbauseitigen Ende, welches auch als hinteres Ende bezeichnet werden kann, eine geschlossene Rückwand 31 aufweist. Zusammen mit einer umlaufenden Seitenwand 33 definiert diese Rückwand 31 einen Aufnahmeraum 17, in den das in der Figur nicht dargestellte Bauteil eingesetzt werden kann. Der Aufnahmeraum 17 ist in seiner Form an die Form des einzusetzenden Bauteils angepasst. So sind im dargestellten Ausführungsbeispiel in der Rückwand 31 Aussparungen 32 vorhanden, die zu vorstehenden Anteilen des einzusetzenden Bauteils korrespondierend ausgestaltet sind. Im linken Bereich der Figur ist gegenüber der Darstellung im rechten Bereich der Figur eine um etwa 90° mit dem Uhrzeigersinn um eine vertikale Achse gedrehte Ansicht des ersten Gehäuseteils 16 dargestellt.

Die Seitenwand 33 weist einen Überlappbereich 28 auf, in dem im geschlossenen Zustand des Dämmgehäuses eine Seitenwand des zweiten Gehäuseteil sowie die Seitenwand 33 des ersten Gehäuseteils 16 parallel und einander überlappend verlaufen. Es ist weiterhin erkennbar, dass an der Seitenwand 33 des ersten Gehäuseteils 16 zum Aufnahmeraum 17 hin weisende Hakenelement 30 angeordnet sind, welche mit dem einzusetzenden Bauteil eine Rastverbindung ausbilden können, sodass das einzusetzende Bauteil sicher in dem ersten Gehäuseteil 16 gehalten werden kann. Dies ist vorteilhaft, um während der Montage das Bauteil zu sichern, schon bevor das Dämmgehäuse geschlossen wird. Als weiteres Detail weist die Seitenwand 33 einen Schlitz 26 auf. Der Schlitz 26 ist zur Vorderseite des ersten Gehäuseteils 16 hin, mit anderen Worten also von der Rückwand 31 wegweisend, offen ausgestaltet. Beim Einsetzen des Bauteils kann so ein an diesem vorgesehener Vorsprung in eine Ausnehmung, mit anderen Worten also in den Schlitz 26, eingreifen, sodass ein Verdrehen oder Verkanten des Bauteils im Aufnahmeraum 17 vermieden wird.

An der Außenseite der Seitenwand 33 weist die Seitenwand 33 eine erste Nut 22, eine zweite Nut 24 sowie die Anschlussöffnungen 34 und 36 auf. Die erste Nut 22 und die zweite Nut 24 sind dabei ausgestaltet, um einen Anteil des in der Figur 3 nicht dargestellten Befestigungselements aufzunehmen. Mit anderen Worten sind die erste Nut 22 und die zweite Nut 24 als Vertiefungen in der Seitenwand 33 ausgestaltet, die in ihrer Form an das Befestigungselement angepasst sind, um eine Formschlussverbindung beziehungsweise eine Klemmverbindung zwischen dem ersten Gehäuseteil 16 und dem Befestigungselement zu ermöglichen. Im dargestellten Ausführungsbeispiel sind zwei Nuten 22, 24 vorhanden. Eine andere Anzahl an Nuten oder Vertiefungen wie beispielsweise eins, drei oder vier ist aber ebenfalls denkbar.

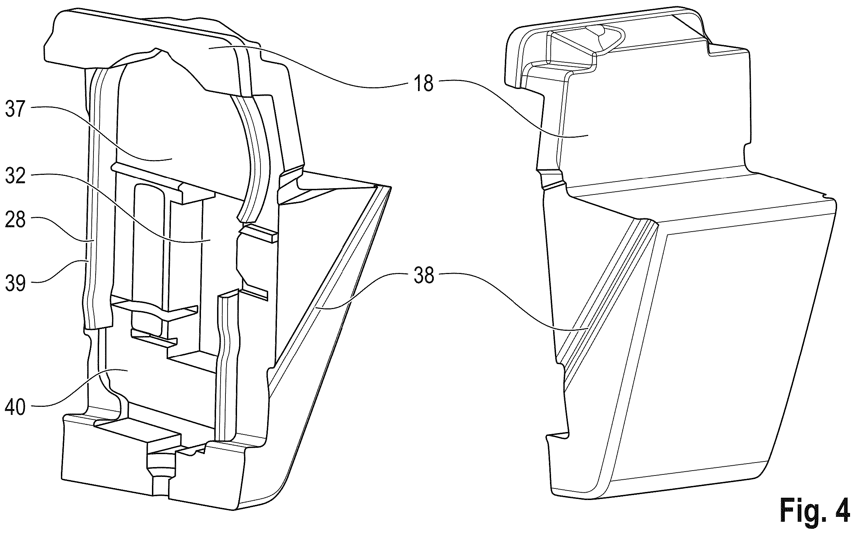

Figur 4 zeigt zwei perspektivische Ansichten eines zweiten Gehäuseteils 18. Dabei ist wiederum im linken Bereich der Figur eine gegenüber der Darstellung im rechten Bereich der Figur um etwa 90° mit dem Uhrzeigersinn um eine vertikale Achse gedrehte Ansicht des zweiten Gehäuseteils 18 dargestellt. Der zweite Gehäuseteil 18 kann ebenfalls aus einem Kunststoff, beispielsweise aus einem begrenzt elastischen Kunststoff, hergestellt sein. Der zweite Gehäuseteil 18 kann auch als vordere Hälfte des Dämmgehäuses oer als Deckel des Dämmgehäuses bezeichnet werden. Der zweite Gehäuseteil 18 weist eine Vorderwand 37 sowie eine umlaufende Seitenwand 39 auf, welche gemeinsam einen Hohlraum 40 definieren, in dem das einzusetzende Bauteil aufgenommen werden kann. Auch der Hohlraum 40 ist an die exakte Form des einzusetzenden Bauteils angepasst und weist entsprechende Aussparungen 32 auf. Die Seitenwand 39 weist einen Überlappbereich 28 auf, der im zusammengefügten Zustand mit dem zuvor beschriebenen Überlappbereich der Seitenwand des ersten Gehäuseteils überlappt. An der äußeren Seitenwand des zweiten Gehäuseteils 18 ist eine dritte Nut 38 angeordnet. Diese Nut ist wiederum als Vertiefung in der äußeren Oberfläche der Seitenwand des zweiten Gehäuseteils 18 ausgestaltet. Die dritte Nut 38 verläuft im dargestellten Ausführungsbeispiel schräg entlang der Außenseite des zweiten Gehäuseteils 18. Die dritte Nut 38 ist ausgestaltet, um mit der ersten Nut und der zweiten Nut des ersten Gehäuseteils aus Figur 3 zusammen zu wirken, um das Befestigungselement aufzunehmen. Mit anderen Worten bilden die Nuten des ersten Gehäuseteils und die dritte Nut 38 des zweiten Gehäuseteils im zusammen gefügten Zustand des Dämmgehäuses gemeinsam eine durchgehende Nut, die korrespondierend zu einem eingreifenden Anteil des Befestigungselements ausgestaltet ist.

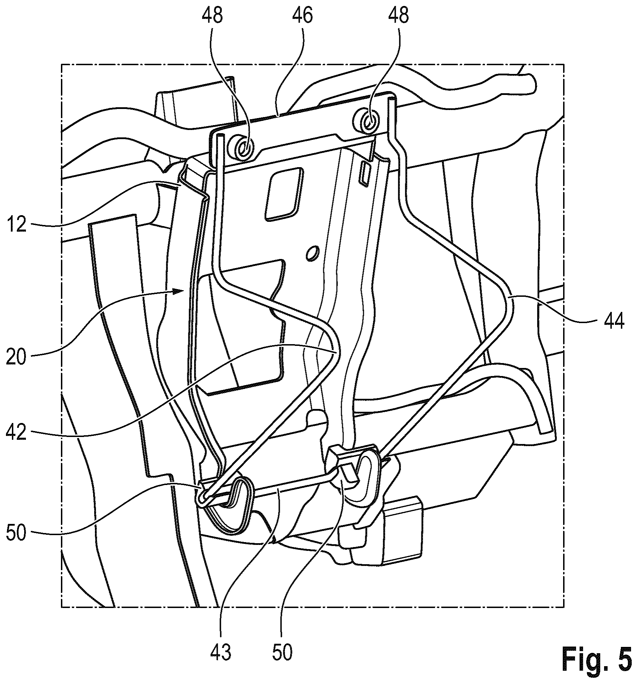

Figur 5 zeigt einen Ausschnitt des Rohbaus 12, an dem das Befestigungselement 20 angebracht ist. Das Befestigungselement 20 besteht dabei im Wesentlichen aus einem ersten Bügelelement 42, einem über einen Querbügelanteil 43 mit dem ersten Bügelelement 42 verbundenen zweiten Bügelelement 44, sowie aus einem Quersteg 46. Der Quersteg 46 ist dabei ein flaches Blechelement, wohingegen die Bügelanteile 42, 43 und 44 aus gebogenen Drahtelementen bestehen. Der Quersteg 46 ist mittels zweier Schrauben 48 an dem Rohbau 12 befestigt. Der Quersteg 46 bildet dabei eine obere horizontal verlaufende Grenzfläche des Befestigungselement 20. Im unteren Bereich des Befestigungselements 20 sind in Aussparungen 51 im Rohbau 12 zwei Kunststoffelemente 50, die an den unteren Ecken des Befestigungselements 20 die Ecken des Befestigungselements 20 umschließen, angeordnet. Im dargestellten Fall wird das Befestigungselement 20 also im unteren Bereich formschlüssig und im oberen Bereich über eine Schraubverbindung mit dem Rohbau 12 verbunden.

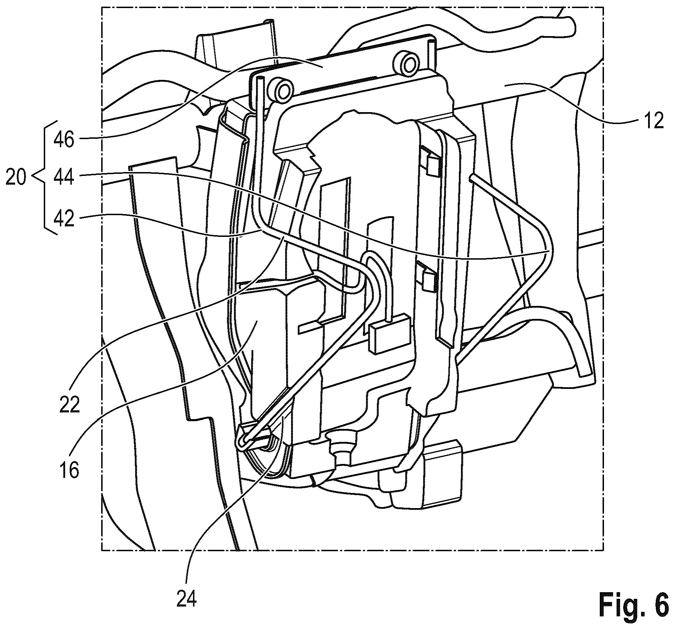

Figur 6 zeigt den gleichen Ausschnitt des Rohbaus 12 wie Figur 5, wobei im dargestellten Zustand der erste Gehäuseteil 16 in das Befestigungselement 20 eingesetzt worden ist. Es ist also wiederum das aus dem ersten Bügelanteil 42, dem zweiten Anteil 44 und dem Quersteg 46 sowie dem in der Figur nicht sichtbaren Querbügelanteil bestehende Befestigungselement 20 dargestellt. Es ist weiterhin zu erkennen, dass der erste Bügelanteil 42 jeweils anteilig von der ersten Nut 22 und von der zweiten Nut 24 aufgenommen und gehalten wird. Der zweite Bügelanteil 44 wird analog dazu ebenfalls jeweils von einer gegenüberliegenden ersten Nut und einer zweiten Nut gehalten beziehungsweise steht mit diesen in einem Formschluss.

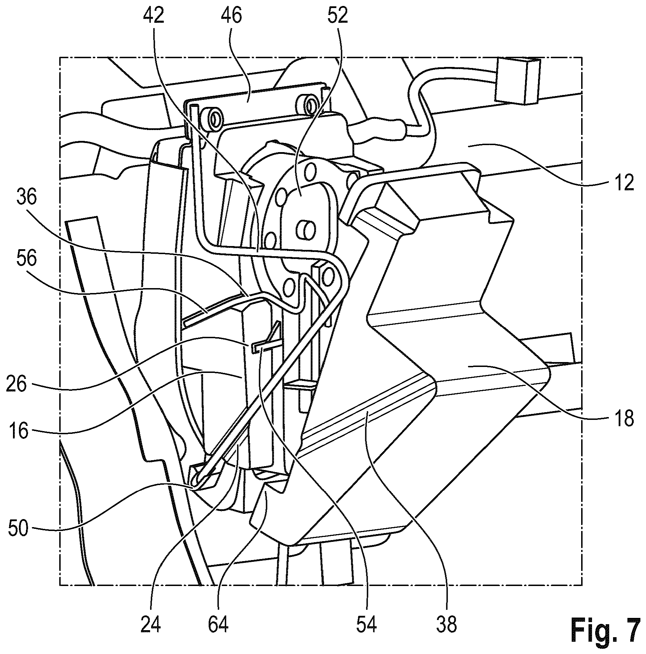

In Figur 7 ist das Bauteil 52 in den dafür vorgesehenen Hohlraum in dem ersten Gehäuseteil 16 eingesetzt worden. Hierbei greift der von dem Bauteil 52 abstehende als Flügel ausgestaltete Stabilisierungsteile 54 in den dafür vorgesehenen Schlitz 26 in dem ersten Gehäuseteil 16 ein. Durch eine Anschlussöffnung 36 wird ein Kabel 56, welches mit dem Bauteil 52 verbunden ist, aus dem ersten Gehäuseteil 16 herausgeführt. Weiterhin ist der zweite Gehäuseteil 18 dargestellt, welcher kurz davor steht, mit dem ersten Gehäuseteil 16 verbunden zu werden, um so das Dämmgehäuse zu verschließen. Der zweite Gehäuseteil 18 kann hierzu leicht zusammengedrückt werden, sodass er zwischen den ersten Bügelanteil 42 und den in der Figur 7 nicht sichtbaren zweiten Bügelanteil eingeführt werden kann. Alternativ können der erste Bügelanteil 42 und der zweite Bügelanteil leicht auseinandergedrückt werden. Der zweite Gehäuseteil 18 weist an seinem unteren Ende einen Überstand 64 auf, mit dem er im zusammengefügten Zustand des Dämmgehäuses die Kunststoffelemente 50 abdeckt. Es ist weiterhin zu erkennen, dass die dritte Nut 38 ausgestaltet ist, um eine Klemmverbindung mit dem ersten Bügelanteil 42 einzugehen. Auf der in der Figur nicht sichtbaren, der ersten Nut 38 gegenüberliegenden Seitenwand des zweiten Gehäuseteils 18 ist ebenfalls eine solche Nut vorhanden, welche mit dem zweiten Bügelanteil ebenfalls eine Klemmverbindung eingeht.

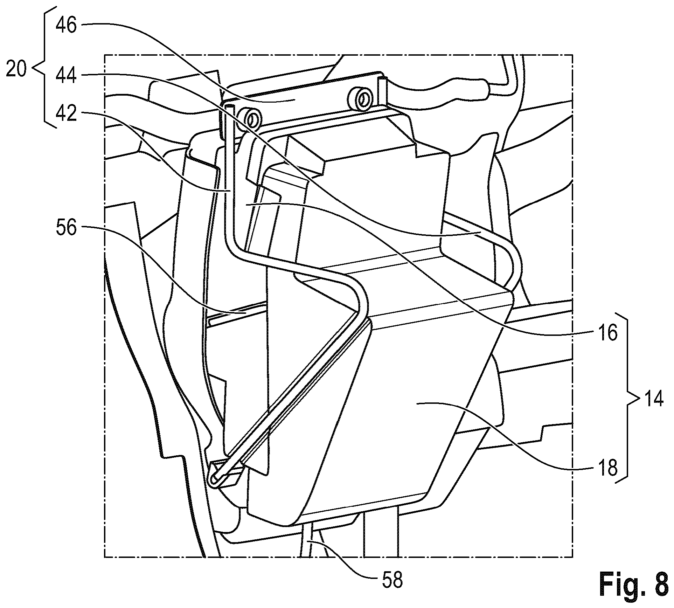

In Figur 8 ist der mit Bezug auf Figur 7 beschriebene Vorgang beendet worden und der zweite Gehäuseteil 18 hat seine Endposition erreicht, in der er gemeinsam mit dem ersten Gehäuseteil 16 dass nun vollständig geschlossene und das Bauteil umschließende Dämmgehäuse 14 bildet. Es ist zu erkennen, dass, abgesehen von den bereits angesprochenen Öffnungen für das Kabel 56 und für den unten aus dem Dämmgehäuse 14 austretenden Seilzug 58, keinerlei Öffnungen des Dämmgehäuses 14 vorhanden sind. Es wird so eine besonders gute Schalldämmung des in dem Dämmgehäuse 14 angeordneten Bauteils erreicht.

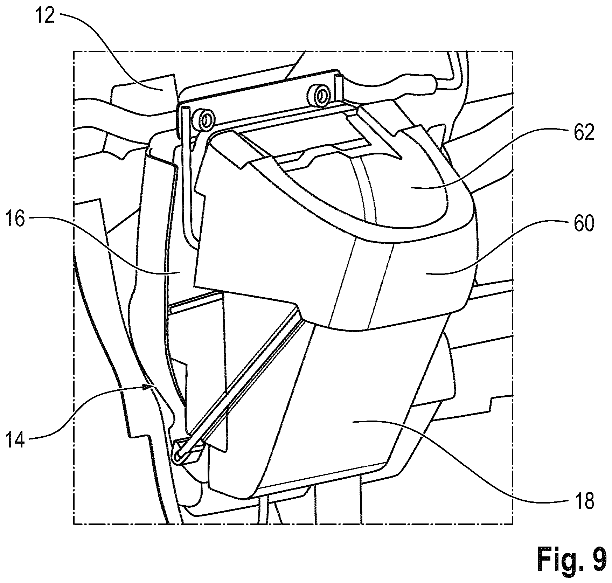

Figur 9 zeigt eine Ansicht des Dämmgehäuses 14, auf das nun das Verschalungselement 60 aufgesetzt wurde. Das Verschalungselement 60 weist dabei einen Hohlraum 62 auf, der als Becherhalter dient und ist ein vom Innenraum des Kraftfahrzeugs aus sichtbares Bauteil. Das Dämmgehäuse 14 sowie das Befestigungselement 20 ebenso wie der gesamte Rohbau 12 werden im fertigen Kraftfahrzeug von weiteren Verblendungsteilen abgedeckt.

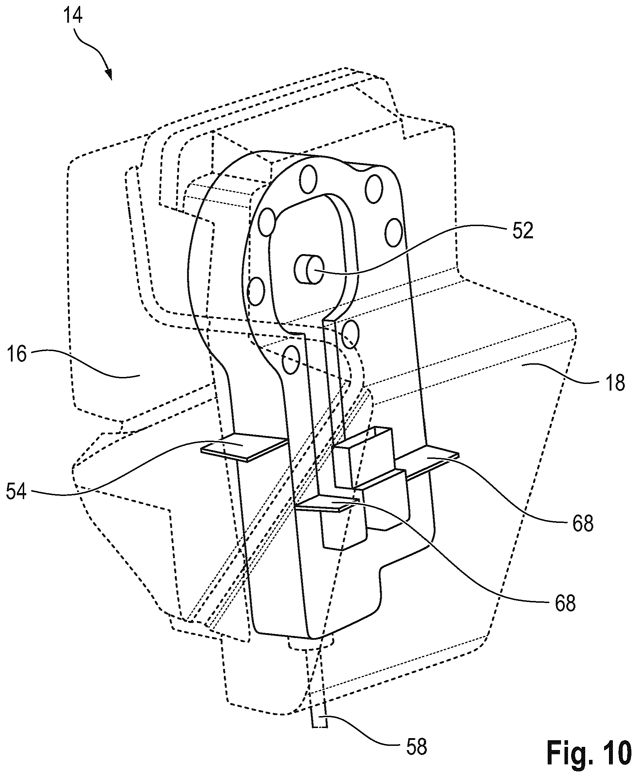

Figur 10 zeigt eine schematische Darstellung des Dämmgehäuses 14 mit dem darin angeordneten Bauteil 52 in Alleinstellung. Es ist zu erkennen, dass der erste Gehäuseteil 16 und der zweite Gehäuseteil 18 bündig aneinander liegen. Im unteren Bereich tritt wiederum der Seilzug 58 durch eine entsprechende Öffnung aus dem Dämmgehäuse 14 aus. Weiterhin ist gut zu erkennen, wie die beiden Stabilisierungsteile 68 sowie der Stabilisierungsteil 54, die jeweils flügelartig beziehungsweise als Flügel ausgestaltet sind, seitlich aus dem Gehäuse des Bauteils 52 hervor stehen, um in die entsprechenden Schlitze des ersten Gehäuseteils 16 beziehungsweise des zweiten Gehäuseteils 18 einzugreifen, um so ein Verdrehen des Bauteils 52 zu verhindern. Die Position des Bauteils 52 innerhalb des Dämmgehäuses 14 wird so stabilisiert.

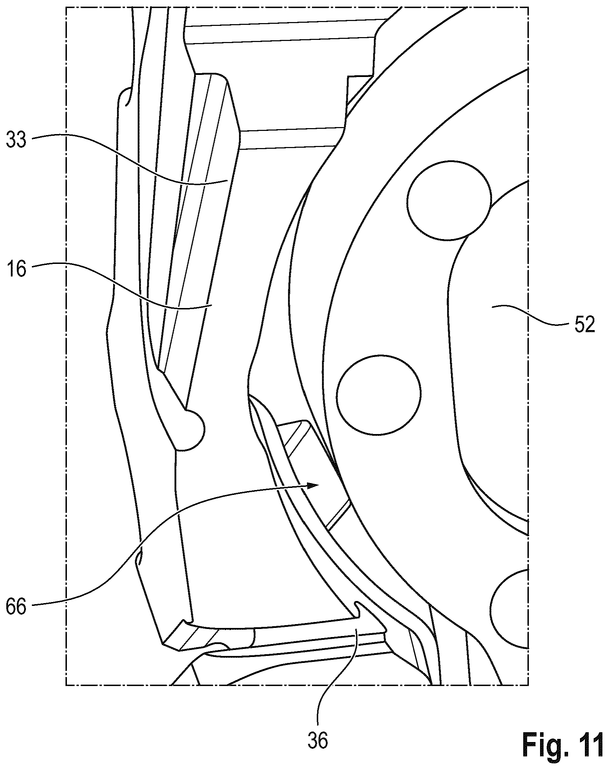

Figur 11 zeigt eine Detaildarstellung, in der ein Teil des ersten Gehäuseteils 16 sowie ein Teil des Bauteils 52 dargestellt ist. Es ist zu erkennen, dass das Bauteil 52 durch den Fanghaken 66, der nach innen von der Seitenwand 33 des ersten Gehäuseteils 16 vorsteht, in seiner Position fixiert wird. Nach dem Einsetzen des Bauteils 52 in den ersten Gehäuseteil 16 wird so bewirkt, dass das Bauteil 52 sicher in dem ersten Gehäuseteil 16 gehalten wird, auch bevor das Dämmgehäuse durch den zweiten Gehäuseteil verschlossen worden ist.

Mit Bezug auf die zuvor genannten Figuren wurden einzelne Ausführungsbeispiele der Erfindung beschrieben. Alle Merkmale verschiedener Ausführungsbeispiele, die sich denklogisch nicht gegenseitig ausschließen, können selbstverständlich miteinander kombiniert werden.

### Bezugszeichenliste

| | | | |
|---|---|---|---|
| 2 | Kraftfahrzeug | 37 | Vorderwand |
| 4 | Innenraum | 38 | dritte Nut |
| 6 | Armaturentafel | 39 | Seitenwand |
| 8 | Mittelkonsole | 40 | Hohlraum |
| 10 | Becherhalter | 42 | erster Bügelanteil |
| 12 | Rohbau | 43 | Querbügelanteil |
| 14 | Dämmgehäuse | 44 | zweiter Bügelanteil |
| 16 | erster Gehäuseteil | 46 | Quersteg |
| 17 | Aufnahmeraum | 48 | Schraube |
| 18 | zweiter Gehäuseteil | 50 | Kunststoffelement |
| 20 | Befestigungselement | 51 | Aussparung |
| 22 | erste Nut | 52 | Bauteil |
| 24 | zweite Nut | 54 | Stabilisierungsteil |
| 26 | Schlitz | 56 | Kabel |
| 28 | Überlappbereich | 58 | Seilzug |
| 30 | Hakenelement | 60 | Verschalungselement |
| 31 | Rückwand | 62 | Hohlraum |
| 32 | Aussparung | 64 | Überstand |
| 33 | Seitenwand | 66 | Fanghaken |
| 34 | Anschlussöffnung | 68 | Stabilisierungsteil |
| 36 | Anschlussöffnung | | |

## Patentansprüche

1. Dämmgehäuse (14) für ein Bauteil (52) eines Kraftfahrzeugs (2), mit einem ersten Gehäuseteil (16) und einem das erste Gehäuseteil (16) verschließenden zweiten Gehäuseteil (18), wobei eine dreidimensionale Außenkontur des Dämmgehäuses (14) ausgestaltet ist, um über eine Formschlussverbindung mit einem Rohbau (12) des Kraftfahrzeugs (2) verbunden zu werden, und wobei das Dämmgehäuse (14) keine Durchgangsöffnungen für Befestigungselemente aufweist.

2. Dämmgehäuse (14) nach Anspruch 1, wobei das Dämmgehäuse (14) um das Bauteil (52) des Kraftfahrzeugs (2) herum mit Ausnahme von Anschlussöffnungen (34, 36) für das Bauteil (52) eine vollständig geschlossene Oberfläche bildet.

3. Dämmgehäuse (14) nach einem der vorstehenden Ansprüche, wobei eine Außenseite des Dämmgehäuses (14) zumindest einen Hinterschnitt, zumindest eine Nut (22, 24, 38) oder zumindest einen Vorsprung zur Ausbildung der Formschlussverbindung mit dem Kraftfahrzeug (2) aufweist.

4. Dämmgehäuse (14) nach einem der vorstehenden Ansprüche, wobei eine Innenkontur des Dämmgehäuses (14) derart an das Bauteil des Kraftfahrzeugs (2) angepasst ist, dass das Bauteil (52) zumindest 90% eines Volumens eines durch das Dämmgehäuse (14) gebildeten inneren Hohlraums ausfüllt.

5. Dämmgehäuse (14) nach einem der vorstehenden Ansprüche, wobei eine Innenkontur des Dämmgehäuses (14) zur Aufnahme von zumindest einem Stabilisierungsteil (54, 68) des Bauteils (52) ausgestaltet ist, um ein Verdrehen des Bauteils (52) innerhalb des Dämmgehäuses (14) zu verhindern.

6. System aus einem Befestigungselement (20) und einem Dämmgehäuse (14) für ein Bauteil (52) eines Kraftfahrzeugs (2), wobei das Befestigungselement (20) Teil eines Rohbaus (20) des Kraftfahrzeugs (2) oder an einem Rohbau (12) des Kraftfahrzeugs (2) festgelegt ist, und wobei das Befestigungselement (20) und das Dämmgehäuse (14) zum Ausbilden einer Klemmverbindung zwischen dem Dämmgehäuse (14) und dem Befestigungselement (20) ausgebildet sind.

7. System nach Anspruch 6, wobei das Dämmgehäuse (14) ein Dämmgehäuse (14) nach einem der Ansprüche 1 bis 5 ist.

8. System nach einem der Ansprüche 6 bis 7, wobei zumindest 90% der Kräfte, die das Bauteil (52) mit dem Halteelement (20) oder mit weiteren Bauteilen des Kraftfahrzeugs (2) austauscht, von dem Dämmgehäuse (14) übertragen werden.

9. System nach einem der Ansprüche 6 bis 8, wobei das Dämmgehäuse (14) ausgestaltet ist, um ein in einem Innenraum des Kraftfahrzeugs (2) sichtbares Verschalungselement (60) zu tragen.

10. Kraftfahrzeug (2) mit einem Dämmgehäuse (14) nach einem der Ansprüche 1 bis 5 oder mit einem System nach einem der Ansprüche 6 bis 9.
